Europäisches Patentamt

European Patent Office

Office européen des brevets

(11) Numéro de publication : **0 454 508 A1**

# (12) DEMANDE DE BREVET EUROPEEN

(21) Numéro de dépôt : **91400651.5**

(22) Date de dépôt : **08.03.91**

(51) Int. Cl.$^5$ : **C08L 23/04,** C08L 65/00, C08K 3/22

(30) Priorité : **26.03.90 FR 9003804**

(43) Date de publication de la demande :
**30.10.91 Bulletin 91/44**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Breant, Patrice**
**505, rue de Lalleau**
**F-62350 Robecq (FR)**

(54) **Compositions polyoléfiniques ignifugées pour revêtement de câbles électriques.**

(57)    Ces compositions, comprenant une charge minérale hydratée, au moins un copolymère éthylène/ester insaturé d'acide carboxylique et au moins un copolymère d'éthylène et d'au moins une α-oléfine, sont constituées essentiellement de 120-240 parties en poids (pp) de charge minérale hydratée pour 100 pp d'une phase polymérique constituée de 20-70 pp d'au moins un copolymère éthylène/ester insaturé d'acide carboxylique ayant une teneur en ester insaturé d'acide carboxylique de 1-50% en moles ; de 0 à 5 pp d'au moins un terpolymère éthylène/(méth)acrylate d'alkyle/anhydride d'acide dicarboxylique insaturé ; de 15-60 pp d'au moins un copolymère d'éthylène et d'au moins une α-oléfine ayant une densité de 0,860-0,915 et un taux de cristallinité au moins égal à 1% ; de 0-5 pp d'au moins un polyéthylène basse densité radicalaire ; et de 10-25 pp d'au moins un polynorbornène contenant une quantité de plastifiant suffisante pour abaisser sa température de transition vitreuse jusqu'à la gamme des caoutchoucs.

EP 0 454 508 A1

Jouve, 18, rue Saint-Denis, 75001 PARIS

La présente invention se rapporte à des compositions ignifugées à base de polymères d'éthylène et à leur application au revêtement de câbles électriques. Plus particulièrement, ces compositions ne contiennent pas de dérivés halogénés et sont aptes à être transformées par des techniques classiques en articles résistants bien au feu tels que notamment les revêtements isolants pour câbles électriques.

L'amélioration de la tenue au feu des compositions contenant des matières polymères est un objectif constant des fabricants et transformateurs de ces matières, visant à obtenir une réduction notable de l'inflammabilité et de l'aptitude à la propagation des flammes de ces matériaux. L'utilisation de dérivés halogénés comme agents d'ignifugation est bien connue mais présente le grand inconvénient de conduire, lors de la combustion, à des gaz toxiques et corrosifs. Les fabricants et transformateurs se sont alors dirigés vers la mise au point de compositions contenant des oxydes, hydroxydes ou sels minéraux de métaux tels que les hydrates d'alumine et de magnésie.

En particulier le brevet EP-A-326 775 décrit des compositions polymères ignifugées constituées essentiellement de 120 à 240 parties en poids de charge minérale hydratée pour 100 parties en poids d'une phase polymérique constituée :

a) de 15 à 55 parties en poids d'au moins un copolymère éthylène/acétate de vinyle (A) ayant une teneur en acétate de vinyle comprise entre 20 et 50% en poids,

b) de 25 à 62 parties en poids d'au moins un terpolymère éthylène/(méth)acrylate d'alkyle/ anhydride d'acide dicarboxylique insaturé (B),

c) de 8 à 45 parties en poids d'au moins un copolymère d'éthylène et d'au moins une α-oléfine (C) ayant une densité comprise entre 0,880 et 0,915 et un taux de cristallinité au moins égal à 5%, et

d) de 0 à 5 parties en poids d'au moins un polyéthylène de basse densité (D).

Des compositions conformes à cet enseignement et comprenant 150 parties en poids d'hydrate d'alumine possèdent un indice d'oxygène limite (déterminé selon la norme ASTM D-2863) compris entre 35 et 37 %, un allongement à la rupture (déterminé selon la norme ASTM D-638) compris entre 110 et 125% et une résistance à la rupture (déterminée selon la norme ASTM D-638) comprise entre 11 et 14 MPa. Ces compositions, qui possèdent de bonnes propriétés de résistance au feu, présentent par contre un manque de souplesse, se traduisant par un module sécant à 1% (déterminé selon la norme NFT 54-102 (71)) d'au moins 200 MPa, qui les rend inappropriées dans des applications telles que l'obtention d'objets souples (plaques) et en particulier le gainage de câbles souples.

Par ailleurs le brevet GB-A-2 190 384 décrit des compositions ignifugées comprenant une charge (trihydrate d'aluminium, hydroxyde de magnésium) et un mélange polymère constitué (en poids) de 10 à 80% de polyéthylène ou copolymère éthylène/acétate de vinyle, 10 à 60% d'élastomère éthylène/propylène et 10 à 40% en poids d'un copolymère éthylène/acide (méth)acrylique, de telles compositions ayant un indice limite d'oxygène qui ne dépasse pas 31.

Par ailleurs il est connu que les propriétés physiques, et notamment mécaniques (allongement et résistance à la rupture) de ce type de compositions diminue fortement quand le taux de charges augmente.

Le problème que la présente invention cherche à résoudre consiste donc à déterminer des compositions ignifugées à base de polymères d'éthylène qui, tout en présentant des propriétés mécaniques comparables à celles du brevet EP-A-326 775 à des taux de charge minérale aussi élevés que possible, possèdent une souplesse telle que notamment leur module sécant à 1% (déterminé selon la norme NFT-54-102 (71)) ne dépasse pas 100 MPa.

La présente invention est basée sur la découverte surprenante que cet objectif peut être atteint en modifiant les compositions du brevet EP-A-326 775 par abaissement de la proportion de terpolymère éthylène/ (méth)acrylate d'alkyle/anhydride maléique et par addition de polynorbornène plastifié.

Un premier objet de la présente invention concerne donc des compositions polymères ignifugées comprenant une charge minérale hydratée, au moins un copolymère éthylène/ester insaturé d'acide carboxylique et au moins un copolymère d'éthylène et d'au moins une α-oléfine, caractérisées en ce qu'elles sont constituées essentiellement de 120 à 240 parties en poids de charge minérale hydratée pour 100 parties en poids d'une phase polymérique constituée de :

a) 20 à 70 parties en poids environ d'au moins un copolymère éthylène/ester insaturé d'acide carboxylique (A) ayant une teneur en ester insaturé d'acide carboxylique comprise entre 1 et 50% en moles,

b) de 0 à 5 parties en poids environ d'au moins un terpolymère éthylène/(méth)acrylate d'alkyle/ anhydride d'acide dicarboxylique insaturé (B),

c) de 15 à 60 parties en poids environ d'au moins un copolymère d'éthylène et d'au moins une α-oléfine (C) ayant une densité comprise entre 0,860 et 0,915 et un taux de cristallinité au moins égal à 1%,

d) de 0 à 5 parties en poids environ d'au moins un polyéthylène basse densité radicalaire (D), et

e) de 10 à 25 parties en poids environ d'au moins un polynorbornène (E) contenant une quantité de plastifiant suffisante pour abaisser sa température de transition vitreuse jusqu'à la gamme des caoutchoucs.

Comme exemples de charges minérales hydratées utilisables dans les compositions selon l'invention, on peut citer des hydroxydes d'aluminium Al(OH)$_3$ et de magnésium Mg(OH)$_2$, les carbonates hydratés tels que le carbonate hydraté de magnésium et de calcium, par exemple de granulométrie moyenne avantageusement comprise entre 0,5 et 2 µm.

Les copolymères éthylène/ester insaturé d'acide carboxylique (A) sont généralement obtenus par copolymérisation, sous pression élevée et à haute température en présence d'initiateurs de radicaux libres, d'éthylène et d'au moins un ester d'acide carboxylique insaturé, tel que l'acide acrylique ou l'acide méthacrylique, et d'un alcool saturé comportant de 1 à 18 atomes de carbone, ou bien un ester d'acide carboxylique saturé et d'alcool insaturé. Un exemple de fabrication de ces copolymères est cité dans les brevets FR-A-2 569 411 et 2 569 412. Des esters utilisables sont par exemple l'acétate et le propionate de vinyle, les méthacrylates de méthyle et butyle ainsi que les acrylates de méthyle, éthyle, isopropyle, n-butyle, isobutyle, tertiobutyle et 2-éthylhexyle. Ces copolymères contiennent avantageusement de 5 à 35% environ en moles d'ester insaturé d'acide carboxylique et possèdent un indice de fluidité (mesuré selon la norme ASTM D-1238) de préférence compris entre 1 et 10 dg/min. environ.

Par terpolymère (B) éthylène/(méth)acrylate d'alkyle/anhydride d'acide dicarboxylique insaturé, on entend de préférence, selon la présente invention, un composé comprenant :
– de 83 à 98,7 % en moles de motifs dérivés de l'éthylène,
– de 1 à 14% en moles de motifs dérivés d'au moins un ester de l'acide acrylique et/ou méthacrylique, et
– de 0,3 à 3% en moles de motifs dérivés d'un anhydride d'acide dicarboxylique insaturé tel que, par exemple, l'anhydride maléique.

L'indice de fluidité du terpolymère (B), mesuré dans les conditions standards (190°C, charge de 2,16 kg) de la norme ASTM-1238, est avantageusement compris entre 1 et 10 dg/min.

Ce terpolymère peut être obtenu par exemple dans les conditions décrites dans les documents FR-A-2 498 609, FR-A-2 569 411 et FR-A-2 569 412. L'ester de l'acide acrylique ou méthacrylique comporte de préférence un groupe alkyle de 1 à 8 atomes de carbone. A titre d'exemples, on peut citer les acrylates et méthacrylates de méthyle, d'éthyle, de n-propyle, d'isopropyle, de n-butyle, d'isobutyle, de n-pentyle, de n-hexyle, d'éthyl-2-hexyle, de n-octyle, de cyclohexyle.

Le copolymère (C) d'éthylène et d'au moins une α-oléfine est obtenu par copolymérisation, en présence de systèmes catalytiques de type Ziegler. Il a généralement un indice de fluidité standard (tel que défini précédemment) compris entre 1 et 5 dg/min. Comme exemples de copolymères (C) utilisables on peut citer la famille de caoutchoucs polyoléfiniques commercialisées par la société MITSUI sous la marque TAFMER®, consistant en des copolymères de 78 à 92% en moles d'éthylène et de 8 à 22% en moles d'une α-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7. On peut également choisir un caoutchouc polyoléfinique consistant en un copolymère éthylène/propylène et/ou butène-1, ayant un indice de fluidité compris entre 0,3 et 15 dg/min. environ et une densité comprise entre 0,865 et 0,885 environ, comprenant de 77 à 91% en moles de motifs dérivés de l'éthylène et de 9 à 23% en moles de motifs dérivés du propylène et/ou du butène-1, caractérisé par une température de fusion cristalline J comprise entre 100° et 125°C environ. Un tel caoutchouc peut être subsidiairement caractérisé par au moins l'un des éléments suivants :
– un indice de polydispersité compris entre 3,5 et 15 environ, de préférence, entre 4 et 8 environ,
– une masse moléculaire géométrique moyenne (définie comme indiqué ci-après) comprise entre 35 et 70 kg/mole environ,
– une relation entre la densité d et la teneur x (exprimée en % en moles) en motifs dérivés du propylène et du butène-1 qui se traduit par la double équation :
$$0,9084 \leq d + 0,002\,x \leq 0,918$$
– un taux de cristallinité résiduelle (déterminé selon la méthode décrite ci-après) compris entre 3 et 15% environ.

Par température de fusion cristalline J au sens de la présente invention, on entend la température déterminée au maximum de la courbe de fusion après cristallisation obtenue en soumettant l'échantillon de copolymère au processus en trois étapes suivant :
– fusion à la vitesse de 8°C par minute depuis 10°C jusqu'à 150°C, puis
– cristallisation à la vitesse de 8°C par minute depuis 150°C jusqu'à 10°C, puis à nouveau
– fusion à la vitesse de 8°C par minute depuis 10°C jusqu'à 150°C.

Le taux de cristallinité résiduelle selon la présente invention est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie, selon la présente invention, par la relation mathé-

matique :

$$\log_{10} Mg = \sum_{i=1}^{i=N} W_i \log_{10} M_i$$

où $W_i$ est la fraction en poids de matière de masse $M_i$ et N est le nombre de fractions éluées par chromatographie sur gel perméable.

De tels copolymères peuvent être obtenus notamment en copolymérisant, à une température de 160 à 270°C environ et sous une pression de 400 à 850 bars environ, un flux gazeux comprenant de 18 à 42% environ en volume d'éthylène et de 58% à 82% en volume d'oléfines (propylène + butène-1) en présence d'un système catalytique de type Ziegler comprenant un activateur organo-aluminium et un composé de métal de transition des groupes IVB, VB, VIB et VIII de la Classification Périodique.

Comme exemples de copolymères (C) utilisables on peut enfin citer des copolymères de densité comprise entre 0,905 et 0,915 conformes au brevet EP-B-72 220 et des copolymères de densité comprise entre 0,890 et 0,905.

Le polyéthylène basse densité (D) est obtenu par homopolymérisation de l'éthylène à température élevée (généralement 140 à 350°C) et sous haute pression (généralement 1000 à 4000 bars) en présence d'un initiateur de radicaux libres (tel que l'oxygène, les peroxydes ou les peresters). Sa densité est généralement comprise entre 0,915 et 0,935, et il a un indice de fluidité standard (tel que défini précédemment) avantageusement compris entre 1 et 10 dg/min.

Par polynorbornène (E) au sens de la présente invention, on entend un polymère ou copolymère amorphe du bicyclo[2,2,1] heptène-2 et de ses dérivés substitués tel que décrit dans le brevet US-A-3 676 390. Parmi les plastifiants du polynorbornène capables d'abaisser sa température de transition vitreuse jusqu'à la gamme des caoutchoucs, on peut citer les huiles lourdes aromatiques, naphténiques ou paraffiniques dérivées du pétrole, de point de congélation inférieur à 0°C et de point éclair supérieur à 180°C, et les diesters de l'acide phtalique tels que les phtalates de dioctyle ou le didodécyle. Ces plastifiants peuvent être utilisés purs ou en mélange.

Une quantité de plastifiant suffisante pour abaisser la température de transision vitreuse du polynorbornène jusqu'à la gamme des caoutchoucs est généralement comprise entre 50 et 150% environ, de préférence 60 à 120%, en poids du poids de polynorbornène.

Sont plus particulièrement préférées les compositions selon l'invention qui contiennent, pour 100 parties en poids de phase polymérique :

a) 35 à 62 parties en poids de copolymère (A),
b) 0 à 3 parties en poids de terpolymère (B),
c) 24 à 51 parties en poids de copolymère (C), et
e) 12 à 15 parties en poids de polynorbornène (E) plastifié.

De telles compositions présentent non seulement un module sécant à 1% ne dépassant pas 100 MPa, mais aussi un indice d'oxygène limite (déterminé selon la norme ASTM D-2863) au moins égal à 36, une tenue au gouttage (selon le test de simulation en nappes) parfaite, un allongement à la rupture au moins égal à 110% et une résistance à la rupture au moins égale à 10 MPa. Le module sécant à 1% des compositions selon l'invention diminue lorsque la proportion de polynorbornène (E) plastifié augmente et/ou lorsque la proportion de charge minérale hydratée diminue.

Les compositions selon l'invention peuvent être préparées par malaxage des ingrédients sous forme de poudre ou granulés de façon à obtenir un mélange homogène prêt à l'emploi.

Elles peuvent être également préparées par malaxage puis fusion et granulation des constituants de la phase polymérique. Les granulés obtenus sont ensuite malaxés avec la quantité voulue d'agent ignifugeant dans le but de fournir un mélange homogène prêt à l'emploi.

Enfin les compositions peuvent être préparées par malaxage de tous les constituants, ceux de la phase polymérique étant à l'état fondu, puis extrusion et granulation. L'extrusion peut également être réalisée sur une coextrudeuse à une température généralement comprise entre 140°C et 190°C environ ; les compositions dans lesquelles la phase polymérique est à l'état fondu et la charge minérale hydratée régulièrement dispersée, peuvent alors être directement transformées, par exemple en revêtement de câble métallique.

Un second objet de la présente invention concerne des articles industriels comprenant une composition telle que décrite ci-dessus. Plus particulièrement, ces articles industriels consistent en des revêtements (gaines) de câble électrique et des plaques souples.

De façon à éviter le fluage à chaud, on procède avantageusement, notamment lors de la fabrication de revêtements de câbles électriques, à la réticulation des compositions selon l'invention. Cette réticulation est réalisée par l'ajout d'une quantité d'agent réticulant suffisante pour éviter le fluage à la température de transformation envisagée (par exemple environ 80°C pour les câbles d'énergie). Le réticulant est notamment choisi parmi les peroxydes, les silanes éthyléniquement insaturés tels que le vinyltriméthoxysilane (dans un premier temps le composé est greffé sur la chaîne polyéthylénique et dans un second temps la réticulation a lieu par action de l'eau pour former des ponts Si-O-Si entre deux molécules), les dérivés époxydiques agissant par réaction sur les fonctions anhydrides du terpolymère (B).

Outre cette application en câblerie, les compositions selon l'invention trouvent d'autres applications où leur caractère de résistance au feu et leurs bonnes propriétés mécaniques sont requises. Elles ont l'avantage d'être transformables en articles industriels souples (feuilles, plaques, profilés, corps creux, tubes, tuyaux), présentant une résistance au feu améliorée, par les techniques classiques de transformation des polyoléfines (extrusion, injection, roto-moulage).

Les exemples suivants ont pour but d'illustrer l'invention de façon non limitative.

Toutes les compositions sont préparées en réalisant un mélange des différents constituants à l'état de poudres ou granulés dans un mélangeur interne, dans lequel les constituants polymères sont fondus, puis en malaxant le mélange pendant 5 minutes sur une calandre de type LESCUYER à une température de 140°C. Toutes contiennent de l'hydrate d'alumine Al(OH)$_3$ de granulométrie moyenne 0,5 μm.

Les propriétés suivantes sont mesurées sur les compositions pressées en plaques de 4 mm d'épaisseur sous une presse de 35 tonnes à 180°C pendant 10 minutes :
- la résistance à la rupture (RR) déterminée selon la norme ASTM D-638 et exprimée en Mégapascals (MPa),
- l'allongement à la rupture (AR) déterminé selon la norme ASTM D-638 et exprimé en %,
- l'indice limite d'oxygène (IOL) déterminé selon la norme ASTM D-2863 et exprimé en %, et
- le module sécant à 1% (MS) déterminé selon la norme NFT 54-102 (71) et exprimé en MPa.

## EXEMPLES 1 à 5

Des compositions ont été préparées en utilisant 0,675 partie d'antioxydant commercialisé sous la dénomination SANTONOX®, 170 parties en poids d'hydrate d'alumine et les constituants polymères suivants :
- un copolymère éthylène/acrylate de méthyle (A) ayant une teneur de 30% en poids d'acrylate de méthyle, un indice de fluidité (mesuré selon la norme ASTM D-1238 à 190°C sous une charge de 2,16 kg) égal à 2 dg/min, commercialisé par la Société NORSOLOR sous la dénomination LOTRYL 3610,
- un terpolymère éthylène/acrylate de n-butyle/ anhydride maléique (B) contenant 97,8 % en moles d'unités dérivées de l'éthylène, 1,2% en moles d'unités dérivées de l'acrylate de n-butyle et 1% en moles d'unités dérivées de l'anhydride maléique, commercialisé par la Société NORSOLOR sous la dénomination LOTADER 3200,
- un copolymère éthylène/butène-1 (C) ayant une densité de 0,900, un indice de fluidité (mesuré selon la norme ASTM D-1238 à 190°C sous une charge de 2,16 kg) de 1 dg/min., commercialisé par la Société NORSOLOR sous la dénomination NORSOFLEX® FW 1900.
- un polynorbornène (E) commercialisé par la Société NORSOLOR sous la dénomination NORSOREX® et préalablement plastifié par 45% en poids d'une huile naphténique, commercialisée par la société TEXACO sous la dénomination DEALEN RD 25.

On a indiqué dans le tableau ci-après les quantités, exprimées en parties en poids, des constituants polymères utilisés pour préparer les compositions ainsi que les résultats de mesures des propriétés desdites compositions.

EP 0 454 508 A1

TABLEAU

| Exemple | (A) | (B) | (C) | (E) | RR | AR | IOL | MS |
|---------|-----|-----|-----|-----|-----|-----|------|-----|
| 1 | 35 | 0 | 51 | 14 | 10 | 122 | 37,0 | 66 |
| 2 | 62 | 0 | 24 | 14 | 10 | 133 | 37,0 | 64 |
| 3 | 52 | 2 | 34 | 12 | 10 | 123 | 37,2 | 70 |
| 4 | 62 | 0 | 15 | 23 | 10 | 120 | 36,0 | 60 |
| 5 | 20 | 5 | 60 | 15 | 10 | 120 | 36,0 | 65 |
| 6 | 62 | 0 | 24 | 14 | 10 | 112 | 36,8 | 68 |
| 7 | 45 | 30 | 25 | 0 | 11 | 123 | 37,0 | 200 |

## EXEMPLE 6

On reproduit les conditions opératoires de l'Exemple 2, à l'exception de la quantité d'hydrate d'alumine qui est portée à 185 parties en poids. Les résultats de mesures des propriétés de la composition résultante figurent au tableau ci-dessus.

## EXEMPLE 7 (Comparatif)

On reproduit les conditions opératoires des Exemples 1 à 5, en supprimant le polynorbornène plastifié (E). Les résultats de mesures des propriétés de la composition résultante figurent au tableau ci-dessus.

## Revendications

**1 -** Compositions polymères ignifugées comprenant une charge minérale hydratée, au moins un copolymère éthylène/ester insaturé d'acide carboxylique et au moins un copolymère d'éthylène et d'au moins une α-oléfine, caractérisées en ce qu'elles sont constituées essentiellement de 120 à 240 parties en poids de charge minérale hydratée pour 100 parties en poids d'une phase polymérique constituée de:

a) 20 à 70 parties en poids d'au moins un copolymère éthylène/ester insaturé d'acide carboxylique (A) ayant une teneur en ester insaturé d'acide carboxylique comprise entre 1 et 50% en moles,

b) de 0 à 5 parties en poids d'au moins un terpolymère éthylène/(méth)acrylate d'alkyle/anhydride d'acide dicarboxylique insaturé (B),

c) de 15 à 60 parties en poids d'au moins un copolymère d'éthylène et d'au moins une α-oléfine (C) ayant une densité comprise entre 0,860 et 0,915 et un taux de cristallinité au moins égal à 1%,

d) de 0 à 5 parties en poids d'au moins un polyéthylène basse densité radicalaire (D), et

e) de 10 à 25 parties en poids d'au moins un polynorbornène (E) contenant une quantité de plastifiant suffisante pour abaisser sa température de transition vitreuse jusqu'à la gamme des caoutchoucs.

**2 -** Compositions selon la revendication 1, caractérisées en ce qu'elles contiennent, pour 100 parties en poids de phase polymérique :

a) 35 à 62 parties en poids de copolymère (A),

b) 0 à 3 parties en poids de terpolymère (B),

c) 24 à 51 parties en poids de copolymère (C), et

e) 12 à 15 parties en poids de polynorbornène (E) plastifié.

**3 -** Compositions selon l'une des revendications 1 et 2, caractérisées en ce que le plastifiant du polynorbornène est présent à raison de 50% à 150% du poids du polynorbornène.

**4 -** Compositions selon l'une des revendications 1 à 3, caractérisées en ce que le copolymère (A) contient environ 5 à 35% en moles de motifs dérivés d'ester insaturé d'acide carboxylique.

**5 -** Compositions selon l'une des revendications 1 à 4, caractérisées en ce que le terpolymère (B) comprend :

– de 83 à 98,7% en moles de motifs dérivés de l'éthylène,

– de 1 à 14% en moles de motifs dérivés d'au moins un ester de l'acide acrylique et/ou méthacrylique, et

– de 0,3 à 3% en moles de motifs dérivés d'un anhydride d'acide dicarboxylique insaturé.

**6 -** Compositions selon l'une des revendications 1 à 5, caractérisées en ce que le terpolymère (B) a un indice de fluidité standard compris entre 1 et 10 dg/min.

**7 -** Compositions selon l'une des revendications 1 à 6, caractérisées en ce que le copolymère (C) a un indice de fluidité standard compris entre 1 et 5 dg/min.

**8 -** Compositions selon l'une des revendications 1 à 7, caractérisées en ce qu'elles sont en outre réticulées au moyen d'une quantité d'agent réticulant suffisante pour éviter le fluage à la température de transformation envisagée.

**9 -** Articles industriels comprenant une composition conforme à l'une des revendications 1 à 8.

**10 -** Articles industriels selon la revendication 9, caractérisés en ce qu'ils consistent en des objets souples et revêtements de câble électrique.

EP 0 454 508 A1

Office européen
des brevets

**RAPPORT DE RECHERCHE EUROPEENNE**

Numero de la demande

EP 91 40 0651

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 326 775  (NORSOLOR)<br>* Revendications 1-11 *<br>--- | 1-10 | C 08 L   23/04<br>C 08 L   65/00<br>C 08 K    3/22 |
| Y | EP-A-0 281 086  (THE B.F. GOODRICH)<br>* Revendication 1; page 2, ligne 35 – page 3, ligne 49 *<br>--- | 1-10 | |
| X | EP-A-0 212 825  (NIPPON PETROCHEMICALS)<br>* Revendications 1-12 *<br>----- | 1-10 | |

**DOMAINES TECHNIQUES RECHERCHES (Int. Cl.5)**

C 08 L
C 08 K

Le présent rapport a été établi pour toutes les revendications

| Lieu de la recherche | Date d'achèvement de la recherche | Examinateur |
|---|---|---|
| LA HAYE | 08-07-1991 | GOOVAERTS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

8